# EUROPEAN PATENT APPLICATION

(11) **EP 2 065 638 A1**
(43) Date of publication of application: **03.06.2009**
(21) Application number: 07791300.2
(22) Date of filing: 25.07.2007
(51) Int. Cl.: F22B 1/28, A47J 27/04, F22B 37/78, F24C 1/00, F24C 7/02

(54) **VAPOR GENERATION DEVICE AND COOKING DEVICE**

(30) Priority: 26.07.2006 JP 2006203625; 06.07.2007 JP 2007178555
(71) Applicant: Sharp Kabushiki Kaisha, Osaka-shi, Osaka 545-8522 (JP)
(72) Inventor: MURAI, Takao, Nara 639-0202 (JP); FURUKAWA, Kazushi, Osaka 558-0015 (JP); MATSUBAYASHI, Kazuyuki, Osaka 558-0015 (JP); YAMAMOTO, Yoshikazu, Osaka 571-0064 (JP); UEKI, Toshiaki, Wakayama 648-0092 (JP)
(74) Representative: Brown, Kenneth Richard
(86) International application number: PCT/JP2007/064584
(87) International publication number: WO 2008/013200

(57) **Abstract**

The inside of an evaporation container (41) is partitioned by a peripheral wall (47) to form a water level detection chamber (S1) and an evaporation chamber (S2) that are interconnected only on the bottom side of the evaporation container (41). A vapor generation heater (42) is placed in the evaporation chamber (S2) of the evaporation container (41). The water level in the water level detection chamber (S1) of the evaporation container (41) is detected by a water level sensor (43a). Water which is supplied from the outside into the evaporation container (41) and is in the evaporation chamber (S2) is heated by the vapor generation heater 842) to generate vapor in the evaporation chamber (S2), and the vapor is discharged from a vapor outlet (73) provided in the evaporation container (41) at a position on the evaporation chamber (S2) side.

## Description

### TECHNICAL FIELD

The present invention relates to a vapor generation device and a cooking device.

### Background Art

### BACKGROUND ART

Conventional vapor generation devices include one having a heater section, which is placed in the vicinity of the bottom of the inside of an evaporation container and which is placed on generally the same level surface as the bottom, for heating the water fed into the evaporation container with the heater section to generate vapor (see, e.g., JP 2005-241190 A). In this vapor generation device, the startup time of vapor generation is shortened by filling the evaporation container with water from the bottom of the inside of the evaporation container to slightly over the top of the heater section so as to minimize the amount of the water to be heated by the heater section.

In the vapor generation device, since the startup time of vapor generation is shortened by soaking the heater section in water while minimizing the amount of the water, the heater section placed in the vicinity of the bottom of the inside of the evaporation container occupies almost all the areas on the level surface inside the evaporation container, which makes it impossible to sufficiently secure the space for mounting a water level sensor and the space for mounting a partition plate for partitioning the water level sensor and the heater section. Accordingly, if the water level sensor and the partition plate are placed in the limited narrow space inside the evaporation container of the vapor generation device, water may pass between the water level sensor and the partition plate, or the water on the water level sensor side partitioned by the partition plate may boil and generate bubbles, thereby causing a problem of incorrect detection of the water level by the water level sensor.

Moreover, in the case of using an electrode sensor with simplified structure for detecting the water level with electrodes, it is not easy to place the electrode sensor and the partition section in the limited space inside the evaporation container since a distance between the electrodes and a distance between the electrode and the partition section need to be secured.

### SUMMARY OF THE INVENTION

Accordingly, an object of the present invention is to provide a vapor generation device and a cooking device which can shorten the startup time of vapor generation while achieving correct detection of the water level inside an evaporation container.

In order to solve the problem, a vapor generation device according to the present invention comprises:
an evaporation container;
a partition section for partitioning an inside of the evaporation container to form a water level detection chamber and an evaporation chamber that are interconnected only on a bottom side of the evaporation container;
a water level sensor for detecting a water level in the water level detection chamber;
a heating section placed in the evaporation container at a position on an evaporation chamber side; and
a vapor outlet provided in the evaporation container at a position on an evaporation chamber side, wherein
vapor generated in the evaporation chamber by heating water in the evaporation chamber by the heating section is discharged through the vapor outlet.

In this structure, when water is fed from the outside into the evaporation container whose inside is partitioned by the partition section to form the water level detection chamber and the evaporation chamber, the water levels in the water level detection chamber and the evaporation chamber, which are interconnected only on the bottom side of the evaporation container, become identical, so that the water level in the evaporation chamber is allowed to be detected by detecting the water level in the water level detection chamber with the water level sensor. The water in the evaporation chamber is heated by the heating section to bring the water in the evaporation chamber to the boil, and the vapor generated by the boil is discharged through the vapor outlet provided on the evaporation chamber side in the evaporation container. As is understood from the above, the water level detection chamber and the evaporation chamber are interconnected only on the bottom of the evaporation container, and the water level detection chamber and the evaporation chamber are blocked from each other at the portion above the bottom side of the evaporation container where they are interconnected to each other. Consequently, heat insulation is provided between the water level detection chamber and the evaporation chambers by the partition section and the vapor generated in the evaporation chamber does not go into the water level detection chamber, so that increase in water temperature in the water level detection chamber is suppressed and thereby the water in the water level detection chamber is prevented from boiling. Also, the water surface in the water level detection chamber is not ruffled even when the water in the evaporation chamber boils and the water surface is ruffled. In such structure, it becomes possible to shorten the startup time of vapor generation while achieving correct detection of the water level in the evaporation container by minimizing the amount of water in the evaporation chamber with respect to the volume of the heating section occupied in the evaporation chamber. Moreover, it becomes possible to secure enough space for mounting the water level sensor or the partition section inside the evaporation container, and thereby an electrode sensor which detects the water level with a plurality of electrodes can be used as the water level sensor, so that the structure can be simplified and cost reduction can be achieved.

In one embodiment, a lowest end of the partition section and a lowest end of the heating section are positioned in a vicinity of a bottom of the evaporation container, and the lowest end of the partition section is lower than the lowest end of the heating section.

In the embodiment, the lowest end of the partition section and the lowest end of the heating section are positioned in the vicinity of the bottom of the evaporation container, and the lowest end of the partition section is made lower than the lowest end of the heating section. Therefore, air bubbles generated in the evaporation chamber become less likely to come into the water level detection chamber, so that it becomes possible to prevent the water surface in the water level detection chamber from being choppy by the air bubbles.

In one embodiment, the water level sensor detects a water level in the water level detection chamber based on an inter-electrode electrostatic capacitance.

In the embodiment, the water level sensor detects the water level in the water level detection chamber based on the inter-electrode electrostatic capacitance, so that reliable detection of the water level is achieved with simple structure.

In one embodiment, one of the electrodes serves as the partition section.

In the embodiment, the partition section also serves as one of the electrodes for detecting the water level so that the structure can be simplified. Also, since only one electrode should be placed in the water level detection chamber, an enough distance between the one electrode in the water level detection chamber and the inner peripheral surface of the partition section, which serves as the other electrode, can easily be secured for preventing dew condensation water from bridging these electrodes due to surface tension. This makes it possible to prevent erroneous detection by the water level sensor due to dew condensation water passing current between the electrodes. Moreover, when the partition section is constituted of an electrode made of a metallic material, it becomes possible to prevent the partition section from melting upon overheating of the heating section due to failure.

In one embodiment, a drain outlet is provided on the bottom of the evaporation container, and an area of the drain outlet faces an area of a lower end opening of the water level detection chamber.

In the embodiment, some areas of the drain outlet provided on the bottom of the evaporation container face some areas of the lower end opening of the water level detection chamber, so that a flow path between the water level detection chamber and the evaporation chamber is expanded in this overlap area, which increases the effective cross-sectional area of the flow path through which water flows from the water level detection chamber into the evaporation chamber. Therefore, even if the lower end opening of the water level detection chamber is lowered to reduce the distance to the bottom of the evaporation container so that air bubbles may not go into the water level detection chamber from the evaporation chamber side, the stream between the water level detection chamber and the evaporation chamber is not disturbed.

In one embodiment, the drain outlet is provided in generally a center of the bottom of the evaporation container.

In the embodiment, because the drain outlet is provided in generally the center of the bottom of the evaporation container, providing inclination around the drain outlet so that the drain outlet becomes a lowest point would facilitate reliable drainage of the water in the evaporation container.

In one embodiment, the partition section for partitioning the inside of the evaporation container is a cylinder-shaped peripheral wall placed inside the evaporation container.

In the embodiment, the partition section which partitions the inside of the evaporation container is constituted of a cylinder-shaped peripheral wall placed inside the evaporation container, so that the inside of the cylinder-shaped peripheral wall serves as the water level detection chamber, while the outside of the cylinder-shaped peripheral wall serves as the evaporation chamber surrounding the water level detection chamber. Consequently, a heating section having, for example, a spiral shape can be placed in the evaporation chamber so as to surround the water level detection chamber, which allows effective use of the space in the evaporation container.

In one embodiment, the partition section for partitioning the inside of the evaporation container is a partition section which forms the water level detection chamber together with a part of an inner wall of the evaporation container.

In the embodiment, the water level detection chamber can easily be formed with use of a part of the inner wall of the evaporation container.

In one embodiment, a lowest end of the partition section is lower than a lower end of the electrode of the water level sensor.

In the embodiment, the lowest end of the partition section is made lower than the lower end of the electrode of the water level sensor, so that the reference water level for detection, under which the lower end of the electrode of the water level sensor in the water level detection chamber is immersed, becomes higher than the lowest end of the partition section.

In one embodiment, an air opening is provided in the evaporation container at a position on a water level detection chamber side.

In the embodiment, an air opening is provided on the water level detection chamber side of the evaporation container, so that air goes in and out of the water level detection chamber through the air opening in response to the up-and-down motion of the water level in the water level detection chamber. Therefore, the water levels in the water level detection chamber and the evaporation chamber, which are interconnected only on the bottom side of the evaporation container, are allowed to be made identical.

In one embodiment, the air opening is dimensioned large enough not to be sealed by dew condensation water due to surface tension of the dew condensation water.

In the embodiment, the air opening is dimensioned large enough not to be sealed by dew condensation water due to surface tension of the dew condensation water, so that it becomes possible to prevent the water level in the water level detection chamber from failing to correctly move up and down due to the air opening sealed by the dew condensation water.

In one embodiment, passing through the water level detection chamber of the evaporation container, water is fed into the evaporation container through a lower end opening of the water level detection chamber.

In the embodiment, water travels through the water level detection chamber of the evaporation container and is fed into the evaporation container through the lower end opening of the water level detection chamber, so that the inside of the water level detection chamber is cooled, and thereby the increase in water temperature and the boil in the water level detection chamber can be suppressed effectively.

In one embodiment, a mounting portion of the evaporation container on which the electrode of the water level sensor is mounted is made of a non-conductive material.

In the embodiment, the mounting portion of the evaporation container on which the electrode of the water level sensor is mounted is made of a non-conductive material, so that it becomes possible to more effectively prevent current from passing between the electrodes of the water level sensor due to the dew condensation water bridging the electrodes.

In one embodiment, the partition section is made of a material whose thermal conductivity is lower than water.

In the embodiment, the partition section is made of a material with thermal conductivity lower than water (e.g., resin such as PPS (Polyphenylene Sulfide)), so that the adiabatic efficiency between the water level detection chamber and the evaporation chamber can be enhanced.

In one embodiment, the partition section is composed of multiple walls including an air layer.

In the embodiment, use of the multiple walls including an air layer as the partition section enhances the adiabatic efficiency between the water level detection chamber and the evaporation chamber.

In one embodiment, surface treatment is applied to an inner wall side of the water level detection chamber to provide water repellence thereto.

In the embodiment, surface treatment for imparting water repellence (e.g., fluoride coating and Teflon (registered trademark of DuPont USA) coating) is applied to the inner wall of the water level detection chamber, so that dew condensation water becomes less likely to adhere to the inner wall of the water level detection chamber, and dew condensation water is effectively prevented from bridging the electrodes of the water level sensor.

A cooking device according to the present invention includes the vapor generation device according to any one of the above embodiments.

According to the structure, a high performance cooking device may be implemented by using the vapor generation device which can shorten the startup time of vapor generation while achieving correct detection of the water level in the evaporation container.

As is clear from the above, according to the vapor generation device of the invention, it becomes possible to implement a vapor generation device which can shorten the startup time of vapor generation while achieving correct detection of the water level in the evaporation container.

According to the cooking device of the invention, a high-end cooking device may be implemented by using the vapor generation device.

### BRIEF DESCRIPTION OF THE DRAWINGS

Fig. 1 is a perspective view showing an external appearance of a cooking device using a vapor generation device in a first embodiment of the invention;
Fig. 2 is a perspective view showing an external appearance of the cooking device shown in Fig. 1 with its door opened;
Fig. 3 is a schematic diagram of the cooking device shown in Fig. 1;
Fig. 4 is a control block diagram of the cooking device shown in Fig. 1;
Fig. 5 is a perspective view of a vapor generation device of the cooking device;
Fig. 6 is a perspective view showing the inside of an essential portion of the vapor generation device cut by half;
Fig. 7 is a side view of the vapor generation device;
Fig. 8 is a top view of the vapor generation device;
Fig. 9 is a longitudinal sectional view taken from IX-IX line shown in Fig. 8;
Fig. 10 is a longitudinal sectional view taken from X-X line shown in Fig. 8;
Fig. 11 is a cross sectional view taken from XI-XI line shown in Fig. 7;
Fig. 12 is a longitudinal sectional view of a vapor generation device in another embodiment;
Fig. 13A is a longitudinal sectional view of a vapor generation device having a water level detection chamber formed from a peripheral wall and a part of the inner wall of the evaporation container;
Fig. 13B is a cross sectional view taken from XIIIB-XIIIB line of Fig. 13A;
Fig. 14 is a longitudinal sectional view of a vapor generation device in a second embodiment of the invention;
Fig. 15 is a schematic view showing the longitudinal cross section of a vapor generation device having a partition section in another form; and
Fig. 16 is a schematic view showing the longitudinal cross section of a vapor generation device having a partition section in still another form.

### DESCRIPTION OF THE EMBODIMENTS

The vapor generation device and the cooking device of the invention are now described in detail in conjunction with the embodiments with reference to the drawings.

### (First Embodiment)

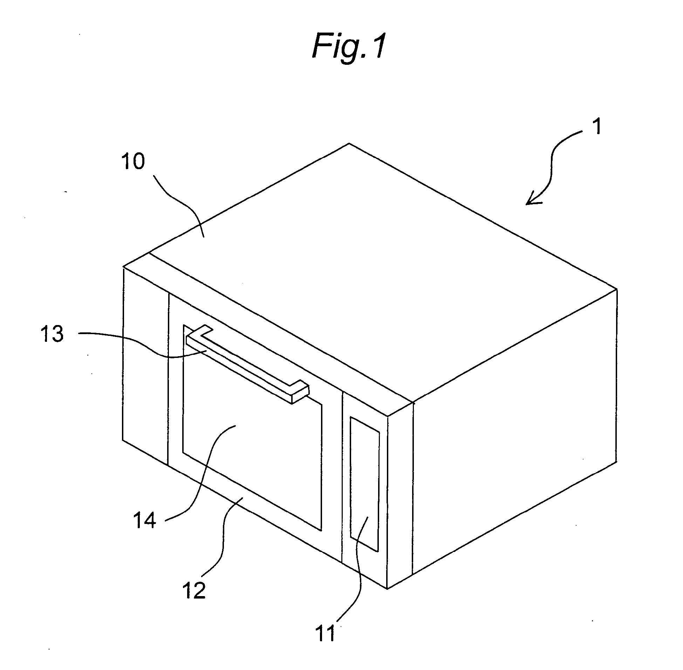

Fig. 1 is a perspective view showing an external appearance of a cooking device using a vapor generation device in the first embodiment of the invention. The cooking device 1 has a door 12, which rotates generally around the lower end side, on the front side of a rectangular parallelepiped main body casing 10. An operation panel 11 is provided on the right-hand side of the door 12, a handle 13 is provided above the door 12, and a window 14 made from a heat-resistant glass is provided generally in the center of the door 12.

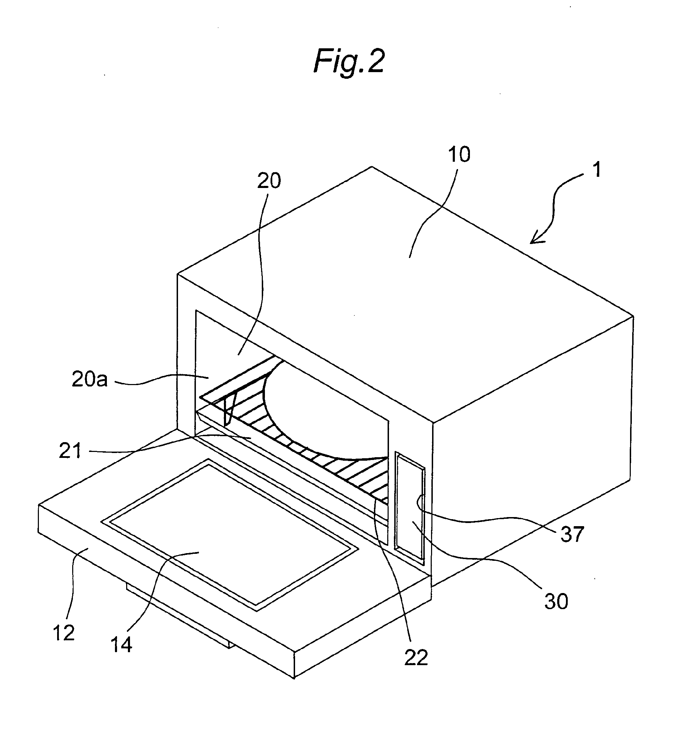

Fig. 2 is a perspective view showing an external appearance of the cooking device 1 with the door 12 opened, in which a rectangular parallelepiped-shaped cooking chamber 20 is provided in the main body casing 10. The cooking chamber 20 has an opening 20a on the front side facing the door 12, and has lateral faces, a bottom face and a top face formed from stainless steel plates. The side of the door 12 which faces the cooking chamber 20 is formed from a stainless steel plate. A thermal insulating material (not shown) is placed on the periphery of the cooking chamber 20 and the inside of the door 12 to insulate the inside and the outside of the cooking chamber 20.

A saucer 21 made from stainless steel is placed inside the cooking chamber 20 at a predetermined interval from the bottom face of the cooking chamber 20, and a rack 22 made from stainless steel wires is placed on the saucer 21 so that an object to be cooked is laid thereon. It is to be noted that while the door 12 is opened, the upper face side of the door 12 is generally level so that an object to be cooked can temporarily be put on the upper face of the door 12 when the object is taken out.

Further, a feed tank storage section 37 for storing a feed tank 30 is provided in the main body casing 10 at the position on the right-hand side of the cooking chamber 20. The feed tank 30 is inserted into the feed tank storage section 37 from the front face side toward the rear face side.

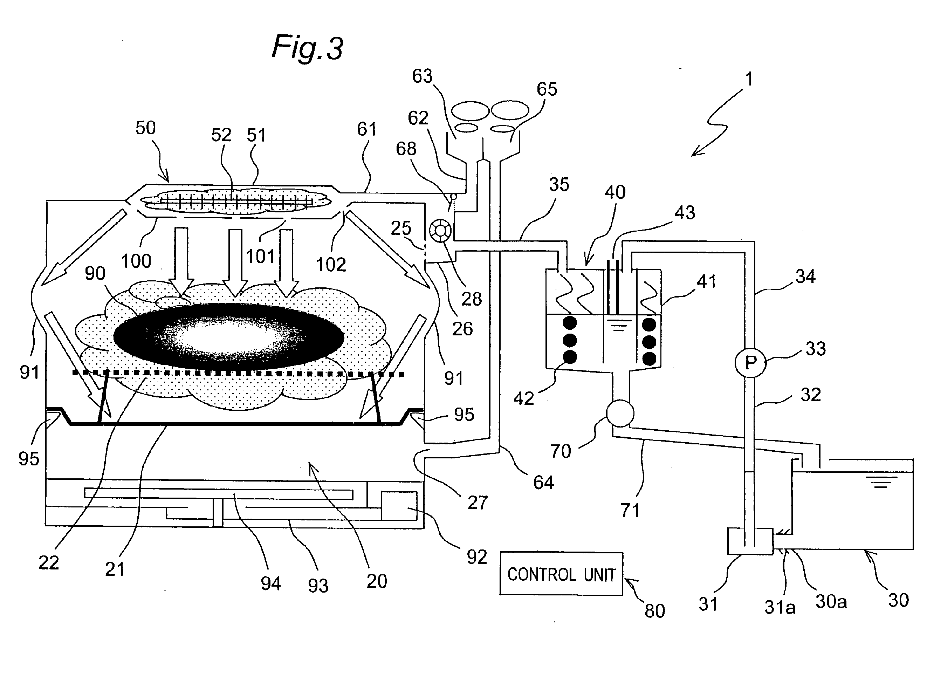

Fig. 3 is a schematic structure view showing the basic structure of the cooking device 1. As shown in Fig. 3, the cooking device 1 is composed of a cooking chamber 20, a feed tank 30 for storing the water for vaporization, a vapor generation device 40 which evaporates the water fed from the feed tank 30 to generate vapor, a vapor heating device 50 for heating the vapor from the vapor generation device 40, and a control unit 80 for controlling the operation of the vapor generation device 40, the vapor heating device 50 and the like. The saucer 21 is supported by a receptacle shelf 95 provided on the light and left side walls of the cooking chamber 20. A lattice-shaped rack 22 is mounted on the saucer 21 in the cooking chamber 20, and an object to be cooked 90 is laid on generally the center of the rack 22. The object to be cooked 90 is accommodated in the cooking chamber 20 with an interval from the bottom face of the cooking chamber 20.

A joint section 30a provided under the feed tank 30 can be connected to a receiving port 31a provided in one end of a junction 31. The junction 31 is connected to one end of a first water feed pipe 32, while the other end of the first water feed pipe 32 is connected to the suction side of a pump 33. The discharge side of the pump 33 is connected to one end of a second water feed pipe 34, while the other end of the second water feed pipe 34 is connected to the vapor generation device 40.

The vapor generation device 40 has an evaporation container 41 connected to the other end of the second water feed pipe 34, a helix-shaped vapor generation heater 42 as an example of the heating section placed inside the evaporation container 41, and a water level sensor 43 placed inside the evaporation container 41. As the vapor generation heater 42, a spirally wound sheathed heater is used. One end of a drain valve 70 is connected to the bottom of the evaporation container 41, while the other end of the drain valve 70 is connected to one end of a drain pipe 71. The other end of the drain pipe 71 is connected to the upper side of the feed tank 30.

A fan casing 26 is placed on the outside of an intake opening 25 provided on an upper lateral face of the cooking chamber 20. The vapor in the cooking chamber 20 is inhaled from the intake opening 25 by a blower fan 28 placed in the fan casing 26, and is fed to the vapor heating device 50 via a second vapor feed pipe 61. The vapor generated by the vapor generation device 40 is inhaled by the blower fan 28 via a first vapor feed pipe 35, and joins the vapor inhaled from the cooking chamber 20, before being fed to the vapor heating device 50 via the second vapor feed pipe 61.

The fan casing 26, the second vapor feed pipe 61, and the vapor heating device 50 constitutes an external circulating path. A discharge opening 27 provided on the lower lateral face of the cooking chamber 20 is connected to one end of a discharge passage 64, while the other end of the discharge passage 64 has a first exhaust port 65. Further, the second vapor feed pipe 61 constituting the external circulating path is connected to one end of an exhaust gas passage 62, while the other end of the exhaust gas passage 62 has a second exhaust port 63. A damper 68 for opening and closing the exhaust gas passage 62 is placed at the junction point between the second vapor feed pipe 61 and the exhaust gas passage 62.

The vapor heating device 50 has a dish-shaped case 51 placed on the ceiling side of the cooking chamber 20 at a position generally the center thereof with its opening facing down, and a vapor heater 52 placed inside the dish-shaped casing 51. The bottom face of the dish-shaped case 51 is formed from a metal protruding section 100 provided on the ceiling surface of the cooking chamber 20.

A magnetron 92 which generates microwaves, a waveguide 93 which guides the microwaves from the magnetron 92 to the cooking chamber 20, and a rotating antenna 94 which stirs the microwaves guided by the waveguide 93 are placed under the cooking chamber 20.

An object to be cooked 90 in the cooking chamber 20 is irradiated with the microwaves generated by the magnetron 92 via the waveguide 93 and the rotating antenna 94. The microwaves are stirred by the rotating antenna 94 and are applied to the object to be cooked 90. The rotating antenna 94 is driven by a rotational driving means (not shown). Cooking using the microwave is applied to cooking not using vapor.

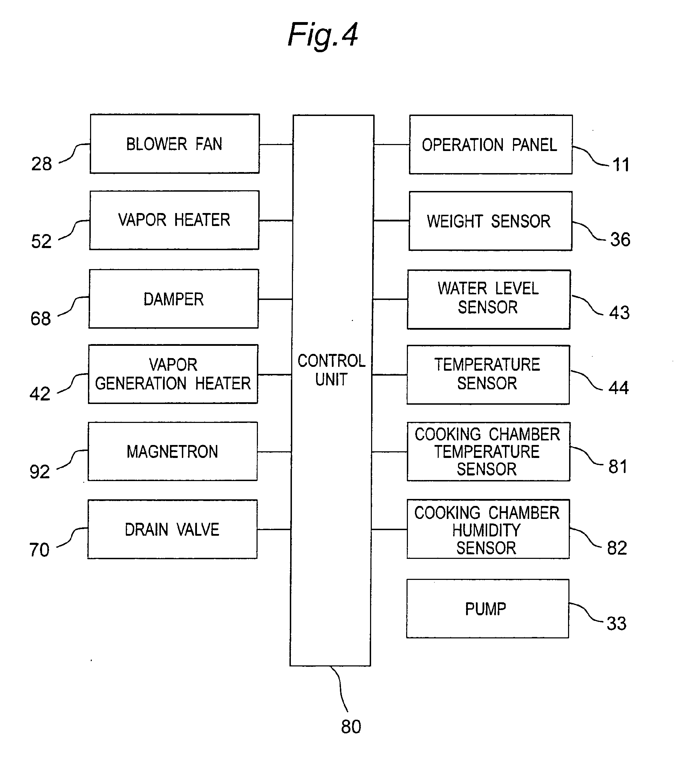

Description is now given of the control block of the cooking device 1 shown in Fig. 4.

As shown in Fig. 4, the control unit 80 is connected to the blower fan 28, the vapor heater 52, the damper 68, the vapor generation heater 42, an operation panel 11, the water level sensor 43, a temperature sensor 44, a cooking chamber temperature sensor 81 for detecting the temperature inside the cooking chamber 20 (shown in Fig. 3), a cooking chamber humidity sensor 82 for detecting the humidity inside the cooking chamber 20, the pump 33, the magnetron 92, and the rotational driving means for driving the rotating antenna 94 (not shown).

The control unit 80, which is composed of a microcomputer, an input-and-output circuit and other components, controls the blower fan 28, the vapor heater 52, the damper 68, the vapor generation heater 42, the vapor generation heater 42, the operation panel 11, the pump 33, the magnetron 92, the rotational driving means (not shown) and so on, according to a predetermined program based on the detection signals from the water level sensor 43, the temperature sensor 44, the cooking chamber temperature sensor 81, and the cooking chamber humidity sensor 82.

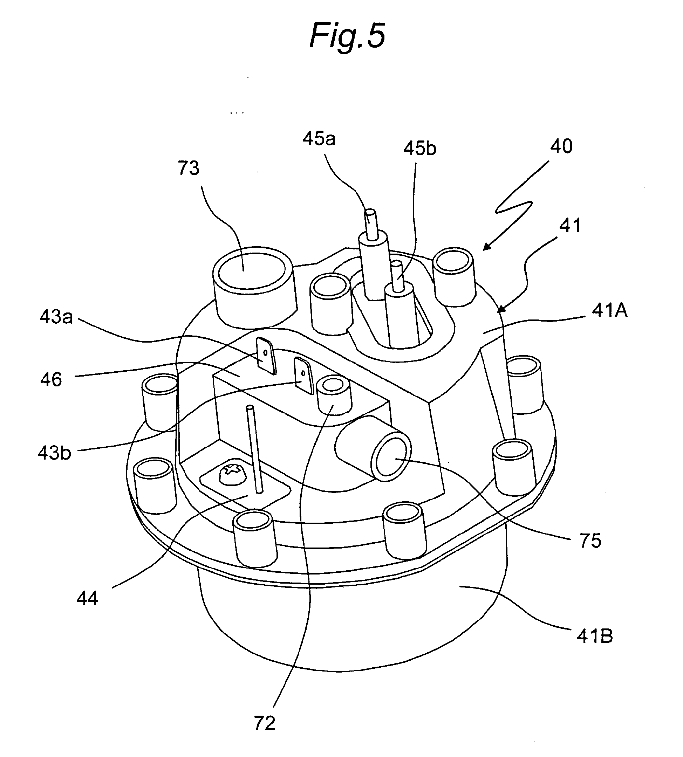

Fig. 5 is a perspective view of the vapor generation device 40. The evaporation container 41 of the vapor generation device 40 is, as shown in Fig. 5, composed of a generally hat-shaped upper container 41A made from heat resistant resin and a generally cup-shaped lower container 41B which is made from stainless steel and which is capped with the upper container 41A. A vapor outlet 73 opening upward is provided on the upper side of the upper container 41A, and heater terminals 45a and 45b of the vapor generation heater 42 (shown in Fig. 3) are also placed thereon. The vapor outlet 73 is connected to the first vapor feed pipe 35 (shown in Fig. 3).

A feed water port 72 opening upward is provided on a step 46 formed in the upper container 41A. The feed water port 72 is connected to the second water feed pipe 34 (shown in Fig. 3). The upper portions of long plate-like electrodes 43a and 43b of the water level sensor 43 (shown in Fig. 3) project to the step 46. Further, an air opening 75 opening in the lateral direction is provided on the lateral wall side of the step 46. The air opening 75 is also connected to the drain pipe 71 for draining the water overflowed from a water level detection chamber S1 via the air opening 75 and the drain pipe 71. The temperature sensor 44 is mounted in the vicinity of the step 46.

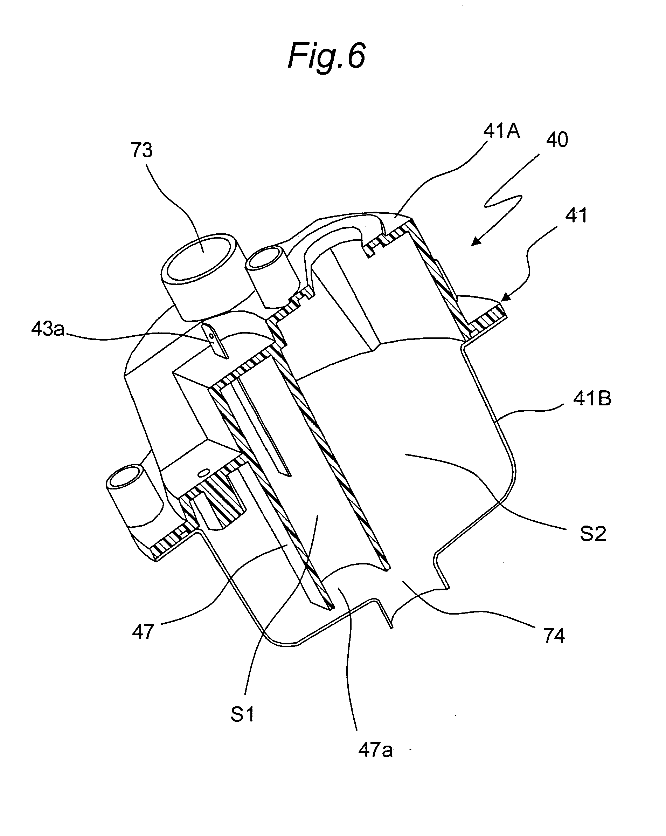

Fig. 6 is a perspective view showing the inside of an important portion of the vapor generation device 40 cut by half, in which the vapor generation heater 42 is omitted. As shown in Fig. 6, the drain outlet 74 is provided in generally the center of the bottom of the lower container 41B. Moreover, the upper container 41A has a cylinder-shaped peripheral wall 47 which has a generally elliptical horizontal section and which extends from the upper side of the upper container 41A toward the lower side, as an example of the partition section which partitions the inside of the evaporation container 41. The inside of the evaporation container 41 is partitioned by the cylinder-shaped peripheral wall 47 to form a water level detection chamber S1 and an evaporation chamber S2 which are interconnected only on the bottom side of the evaporation container 41. The water level detection chamber S1 and the evaporation chamber S2 are blocked from each other on the portion above the bottom side of the evaporation container 41 where they are interconnected to each other.

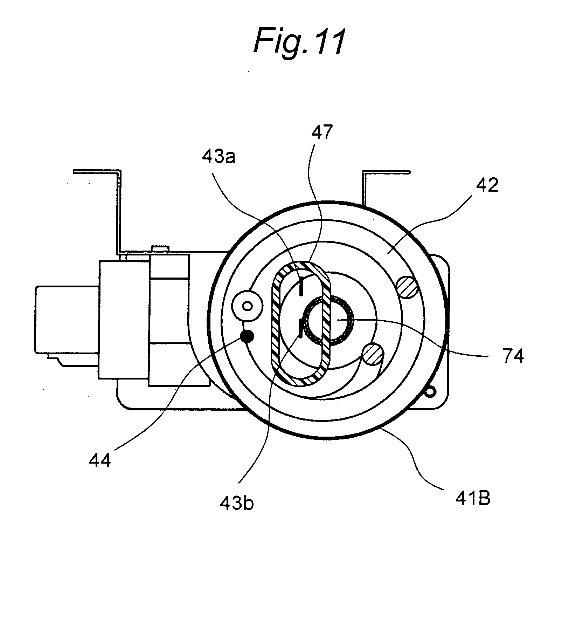

Some areas of the drain outlet 74 on the bottom of the evaporation container 41 face some areas of the lower end opening of the water level detection chamber S1 (lower end opening 47a of the cylinder-shaped peripheral wall 47) (see Fig. 11).

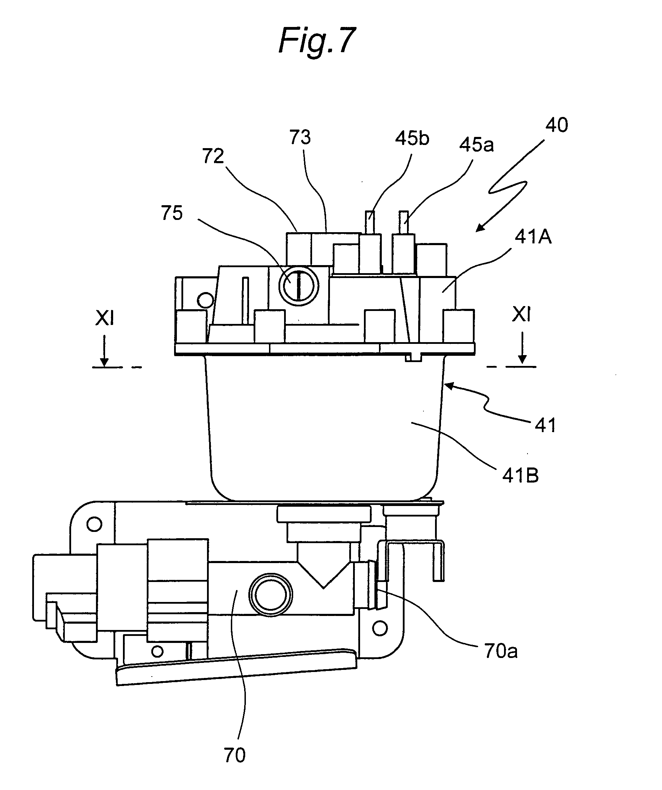

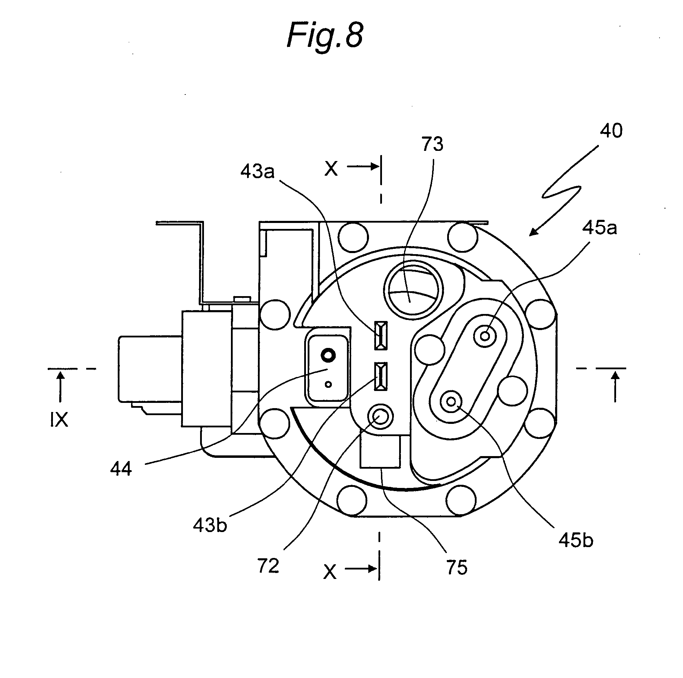

Fig. 7 is a side view of the vapor generation device 40, and Fig. 8 is a top view of the vapor generation device 40. In Fig. 7 and Fig. 8, the component members identical to those in Fig. 5 and Fig. 6 are designated by identical reference numerals.

The feed water port 72 and the air opening 75 shown in Fig. 7 and Fig. 8 are linked to the water level detection chamber S1 (shown in Fig. 6) side, and water is fed into the evaporation container 41 through the feed water port 72 and the water level detection chamber S1 from the lower end opening of the water level detection chamber S1 (lower end opening 47a of the cylinder-shaped peripheral wall 47). The vapor outlet 73 shown in Fig. 7 and Fig. 8 is linked to the evaporation chamber S2 (shown in Fig. 6) side, and the vapor generated in the evaporation chamber S2 comes out of the vapor outlet 73.

The drain valve 70 is connected to the lower end of the lower container 41B, and one end of the drain pipe 71 (shown in Fig. 3) is connected to an outlet 70a on the lateral side of the drain valve 70. It is to be noted that in Fig. 7, the passage opened and closed by the drain valve 70 between the drain outlet 74 on the bottom of the evaporation container 41 and the outlet 70a of the drain valve 70 is omitted.

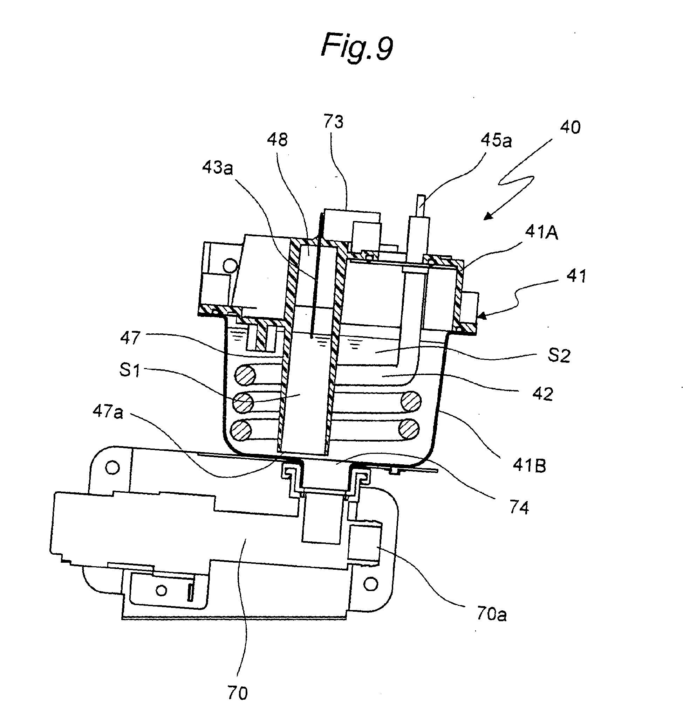

Fig. 9 is a longitudinal sectional view seen from IX-IX line shown in Fig. 8. In Fig. 9, the component members identical to those in Fig. 7 and Fig. 8 are designated by identical reference numerals.

As shown in Fig. 9, a helix-shaped vapor generation heater 42 is placed in the evaporation chamber S2 of the evaporation container 41 so as to surround the water level detection chamber S1. The lower end of the cylinder-shaped peripheral wall 47 has a predetermined distance to the plane of the bottom of the evaporation container 41, so that the water fed into the water level detection chamber S1 via the feed water port 72 is fed to the evaporation chamber S2 through the space between the lower end of the cylinder-shaped peripheral wall 47 and the bottom of the evaporation container 41.

In this case, generally the half of the circular drain outlet 74 on the bottom of the evaporation container 41 overlaps with a part of the lower end opening 47a of the cylinder-shaped peripheral wall 47. Thus, even if the space between the lower end of the cylinder-shaped peripheral wall 47 and the bottom of the evaporation container 41 is decreased, some areas of the drain outlet 74 are made to face some areas of the lower end opening 47a of the water level detection chamber S1 so that the effective cross-sectional area of the flow path of the water flowing from the water level detection chamber S1 to the evaporation chamber S2 can be enlarged.

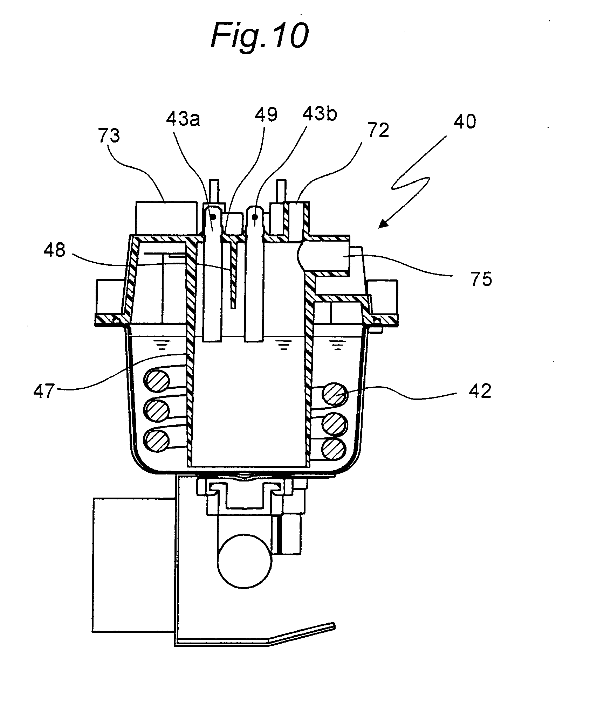

Fig. 10 is a longitudinal sectional view seen from X-X line shown in Fig. 8. In Fig. 10, the component members identical to those in Fig. 7 and Fig. 8 are designated by identical reference numerals.

As shown in Fig. 10, the long plate-like electrodes 43a and 43b of the water level sensor 43 extend from the upper side of the evaporation container 41 to the lower side in the evaporation container 41, and are placed generally in parallel with each other at a predetermined interval. A partition member 48 extending from the upper side of the evaporation container 41 to the lower side in evaporation container 41 is provided between these electrodes 43a and 43b. The partition member 48 partitions the area into the electrode 43a side and the electrode 43b side. The partition member 48 partitions the space between the electrode 43a and 43b, so that dew condensation water does not cross between the electrode 43a and 43b due to surface tension.

An upper swelled section 49 is provided on the upper side of the mounting section of the evaporation container 41 on which the upper side portions of the electrodes 43a and 43b of the water level sensor 43 are mounted, the electrodes 43a and 43b being projected from the upper side of the evaporation container 41. The upper swelled section 49 has a taper from the evaporation container 41 side toward the upper portions of the electrodes 43a and 43b of the water level sensor 43. It becomes possible to prevent water from bridging the electrodes 43a and 43b due to water drops fallen from above the evaporation container 41 as well as dew condensation generated in the step 46.

Fig. 11 is a cross sectional view seen from XI-XI line shown in Fig. 7. Fig. 11 shows that generally the half of the circular drain outlet 74 on the bottom of the evaporation container 41 overlaps a part of the generally oval-shaped lower end opening 47a (shown in Fig. 9) of the cylinder-shaped peripheral wall 47.

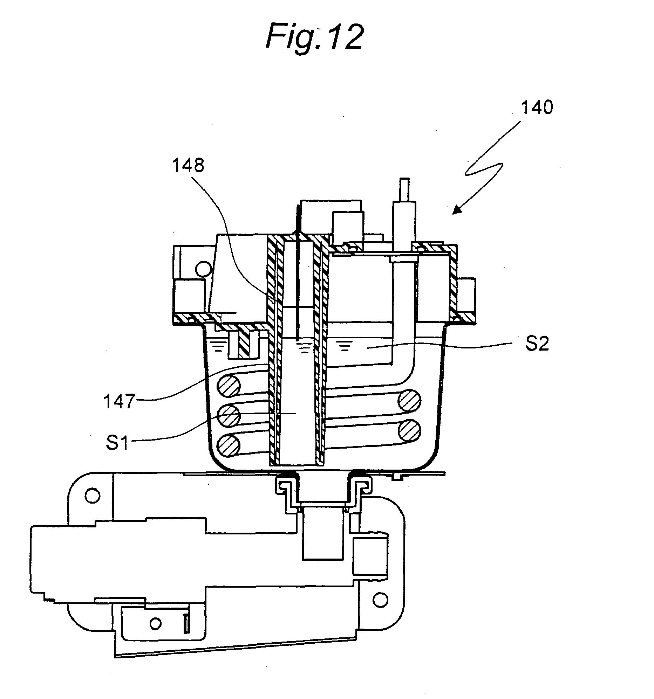

Fig. 12 is a longitudinal sectional view of a vapor generation device 140 in another embodiment, in which the vapor generation device 140 has the same structure as the vapor generation device 40 shown in Figs. 5 to 11 except for the cylinder-shaped peripheral wall.

In the vapor generation device 140, the multiple walls including an air layer 148 are used as the cylinder-shaped peripheral wall 147. The air layer 148 should preferably extend from the vicinity of the lower end of the peripheral wall 147 to at least above the water surface in the evaporation chamber S2. Thus-structured air layer 148 effectively insulates between the evaporation chamber S2 and the water level detection chambers S1, and thereby prevents the water in the water level detection chamber S1 from boiling. It is to be noted that a plurality of the air layers 148 may be provided.

The above-structured cooking device 1 is turned on upon pressing of an electric power switch (not shown) in the operation panel 11 shown in Fig. 1, and operation of cooking is started by operation of the operation panel 11. First, the control unit 80 shown in Fig. 3 applies current to the vapor generation heater 42, and starts operation of the pump 33 with the exhaust gas passage 62 closed by the damper 68. Water is pumped into the evaporation container 41 of the vapor generation device 40 from the feed tank 30 by the pump 33 via the first and second water feed pipes 32 and 33. In this case, a specified amount of water is fed into the evaporation container 41 based on the water level in the evaporation container 41 detected by the water level sensor 43.

The specified amount of water stored in the evaporation container 41 is then heated by the vapor generation heater 42.

Next, in concurrence with the application of current to the vapor generation heater 42, the blower fan 28 is turned on while current is also applied to the vapor heater 52 of the vapor heating device 50. As a consequence, the blower fan 28 inhales air (including vapor) in the cooking chamber 20 from the intake opening 25, and sends out the air (including vapor) to the second vapor feed pipe 61. Using a centrifugal fan for the blower fan 28 can generate higher voltage than a propeller fan. Further, the centrifugal fan used for the blower fan 28 is rotated at high speed with a direct-current motor, so that the flow velocity of circulating air current can be made extremely high.

Next, as the water in the evaporation chamber S2 of the evaporation container 41 in the vapor generation device 40 boils, saturated vapor is generated, and the generated saturated vapor is inhaled by the blower fan 28 via the vapor outlet 73 and the first vapor feed pipe 35 of the evaporation container 41 and joins the circulating air current passing the second vapor feed pipe 61. The vapor which joined the circulating air current flows into the vapor heating device 50 via the second vapor feed pipe 61 at high speed.

The vapor which flowed into the vapor heating device 50 from the vapor generation device 40 is then heated by the vapor heater 52, and turns into superheated vapor of about 300 °C (which varies depending on the content of cooking). One part of the superheated vapor is emitted downward in the cooking chamber 20 from a plurality of first ceiling vapor outlet holes 101 provided in the protruding section 100. The other part of the superheated vapor are emitted from the second ceiling vapor outlet hole 102 provided on an inclined surface 100b of the protruding section 100 and guided by a heat carrier guide section 91 provided on the right and left lateral surfaces of the cooking chamber 20 so that the superheated vapor is fed to the object to be cooked 90 in the cooking chamber 20 from the undersurface side.

In this case, the convective vapor in the heating chamber 20 repeats circulation of being consequently inhaled into the intake opening 25 and returned into the heating chamber 20 through the external circulating path.

Thus, forming convection of the superheated vapor inside the heating chamber 20 makes it possible to emit the superheated vapor from the vapor heating device 50 through a ceiling steam outlet 55 and a side steam outlet 24 while maintaining the temperature and humidity distribution in the heating chamber 20 constant, so that the superheated vapor can efficiently collide with the object to be cooked 90 laid on the rack 22. The object to be cooked 90 is heated by the collision with the superheated vapor. At this point, the superheated vapor in contact with the surface of the object to be cooked 90 also heats the object to be cooked 90 by emitting latent heat upon condensation on the surface of the object to be cooked 90. Thereby, a huge amount of heat from the superheated vapor can equally be given to all over the object to be cooked 90 in a reliable and prompt manner. This makes it possible to achieve cooking with uniform and sufficient results. Since the heating chamber 20 filled with superheated vapor has low oxygen concentration of about 1%, oxidization of the object to be cooked 90 is suppressed, and thereby vitamin C and other elements can be preserved.

During operation of the cooking device, as time passes, the amount of vapor in the cooking chamber 20 increases, and therefore the vapor which quantitatively becomes an excessive vapor is emitted from the discharge opening 27 via the discharge passage 64 and discharged to the outside from the first exhaust port 65.

After the end of cooking, a message notifying the end of cooking is displayed on the operation panel 11 by the control unit 80. In addition, the end of cooking is also acoustically notified by a buzzer (not shown) provided in the operation panel 11. When the user notified of the end of cooking opens the door 12, the control unit 80 detects the door 12 opened by a sensor (not shown), and immediately opens the damper 68 of the exhaust gas passage 62. Thereby, the second vapor feed pipe 61 in the external circulating path is interconnected to the second exhaust port 63 via the exhaust gas passage 62, so that the vapor in the cooking chamber 20 is discharged by the blower fan 28 from the second exhaust port 63 via the intake opening 25, the second vapor feed pipe 61, and the exhaust gas passage 62. The damper operation is also performed when the user opens the door 12 during cooking. With this, the user can safely take out the object to be cooked 90 from the cooking chamber 20 without being exposed to the vapor.

According to the vapor generation device 40, when water is fed from the outside into the evaporation container 41 partitioned by the cylinder-shaped peripheral wall 47 as an example of the partition section to form the water level detection chamber S1 and the evaporation chamber S2, the water levels in the water level detection chamber S1 and the evaporation chamber S2 which are interconnected only on the bottom side of the evaporation container 41 become identical, and therefore the water level in the evaporation chamber S2 can be detected by detecting the water level in the water level detection chamber with a water level sensor. Moreover, the water in the evaporation chamber S2 is heated to boil by the vapor generation heater 42 as an example of the heating section, and the vapor generated by the boiling is discharged from the vapor outlet provided at the evaporation chamber side of the evaporation container 41. Thus, since the water level detection chamber S1 and the evaporation chamber S2 are interconnected only on the bottom side of the evaporation container 41, and the water level detection chamber S1 and the evaporation chamber S2 are blocked from each other on the portion above the bottom side of the evaporation container 41 where they are interconnected to each other, the space between the water level detection chamber S1 and the evaporation chambers S2 is insulated by the peripheral wall 47, and the vapor generated in the evaporation chamber S2 does not go into the water level detection chamber S1. Consequently, the increase in water temperature in the water level detection chamber S1 is suppressed to prevent the water in the water level detection chamber S1 from boiling, while dew condensation becomes less likely to occur in the water level sensor portion. Therefore, it becomes possible to prevent erroneous detection of the water level sensor caused by current passing between the electrodes due to the dew condensation water which passes between the electrodes due to surface tension. Further, even when the water in the evaporation chamber S2 is boiled and the water surface thereof is disturbed, the water surface in the water level detection chamber S1 will not be disturbed. In such a configuration, it becomes possible to shorten the startup time of vapor generation while achieving correct detection of the water level in the evaporation container 41 by minimizing the amount of water in the evaporation chamber S2 with respect to the volume of the vapor generation heater 42 occupied in the evaporation chamber. Moreover, it becomes possible to secure enough space for mounting the water level sensor 43 or the peripheral wall 47 inside the evaporation container 41, and thereby an electrode sensor which detects the water level with electrodes can be used as a water level sensor, so that the structure can be simplified and cost reduction can be achieved.

Moreover, since the lowest end of the peripheral wall 47 and the lowest end of the vapor generation heater 42 are positioned in the vicinity of the bottom of the evaporation container 41, and the lowest end of the peripheral wall 47 is made lower than the lowest end of the vapor generation heater 42, air bubbles generated in the evaporation chamber S2 become less likely to go into the water level detection chamber S1. Therefore, it becomes possible to prevent the water in the water level detection chamber S1 from being choppy by the air bubbles entering into the water level detection chamber S1 form the evaporation chamber S2 side.

Moreover, some areas of the drain outlet 74 provided on the bottom of the evaporation container 41 face some areas of the lower end opening of the water level detection chamber S1 (lower end opening 47a of the cylinder-shaped peripheral wall 47), so that a flow path between the water level detection chamber S1 and the evaporation chamber S2 are expanded in this overlap area, which increases the effective cross-sectional area of the flow path through which water flows into the evaporation chamber S2 from the water level detection chamber S1. Therefore, even if the lower end opening of the water level detection chamber S1 is lowered to reduce the distance to the bottom of the evaporation container 41 so that air bubbles may not go into the water level detection chamber S1 from the evaporation chamber side S2, the stream between the water level detection chamber S1 and the evaporation chamber S2 is not disturbed.

Moreover, the drain outlet 74 is provided in generally the center of the bottom of the evaporation container 41, and inclination is provided around the drain outlet 74 so that the drain outlet 74 may become a lowest point. This makes it possible to facilitate reliable drainage of the water in the evaporation container 41.

Moreover, the partition section which partitions the inside of the evaporation container 41 is constituted of a cylinder-shaped peripheral wall 47 placed inside the evaporation container 41, so that the inside of the cylinder-shaped peripheral wall 47 serves as a water level detection chamber S1, while the outside of the cylinder-shaped peripheral wall 47 serves as an evaporation chamber S2 surrounding the water level detection chamber S1. Consequently, the helix-shaped vapor generation heater 42 can be placed in the evaporation chamber S2 so as to surround the chamber S1, which makes it possible to utilize the space in the evaporation container 41.

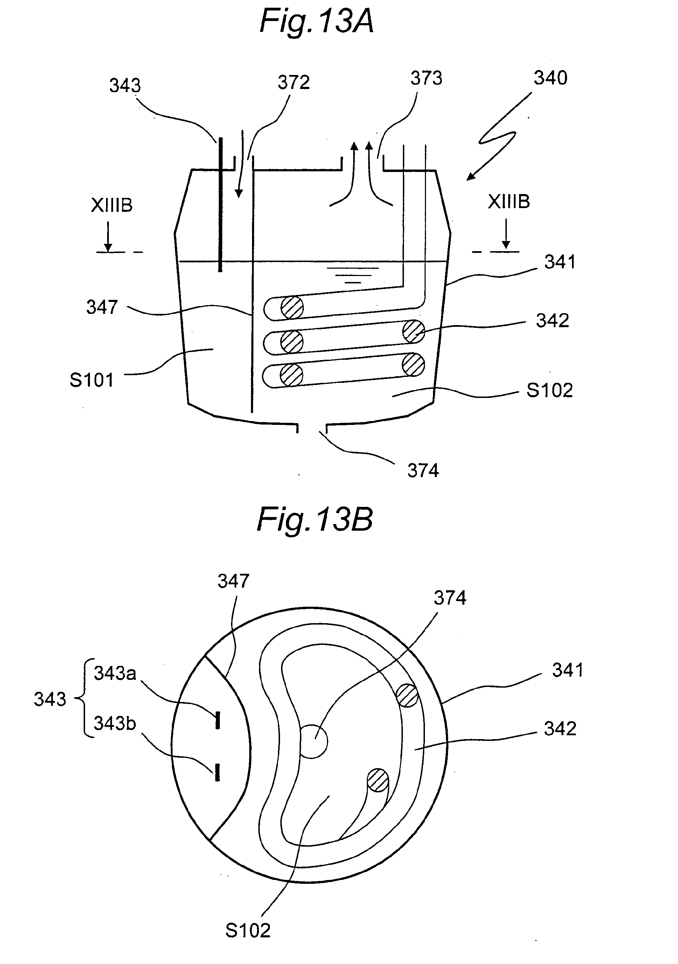

Moreover, since the peripheral wall 47 and a part of the inner wall of the evaporation container 41 form the water level detection chamber S1, the water level detection chamber S1 can easily be formed with use of a part of the inner wall of the evaporation container 41. For example, Fig. 13A is a longitudinal sectional view of a vapor generation device 340 having a water level detection chamber formed from a peripheral wall and a part of the inner wall of the evaporation container, and Fig. 13B is a cross sectional view seen from XIIIB-XIIIB line of Fig. 13A. As shown in Fig. 13A and Fig. 13B, the vapor generation device 340 has a partition section 347 extending from the upper side to the lower side of the evaporation container 341 in the evaporation container 341 having a circular cross section. The inside of the evaporation container 341 is partitioned by the partition section 347 to form a water level detection chamber S101 and an evaporation chamber S102 which are interconnected only on the bottom side of the evaporation container 341. The water level detection chamber S101 and the evaporation chamber S102 are blocked from each other on the portion above the bottom side of the evaporation container 341 where they are interconnected to each other. A vapor generation heater 342 having a modified helix shape is placed in the evaporation chamber S102 of the evaporation container 341. A feed water port 372 opening upward is provided on the upper side of the water level detection chamber S101 of the evaporation container 341, while a vapor outlet 373 opening upward is provided on the upper side of the evaporation chamber S102 of the evaporation container 341. The feed water port 372 is connected to the second water feed pipe 34 (shown in Fig. 3). Moreover, an air opening (not shown) is provided so as to open to the upper side of the water level detection chamber S101 of the evaporation container 341. The air opening is also connected to the drain pipe 71 (shown in Fig. 3) for draining the water overflowed from the water level detection chamber S101 via the air opening and the drain pipe 71. Long plate-like electrodes 343a and 343b of a water level sensor 343 are placed on the upper side of the water level detection chamber S101 of the evaporation container 341. A drain outlet 374 is provided in generally the center of the bottom of the evaporation container 341.

Accordingly, in comparison with the vapor generation device 40 shown in the Fig. 5 to 10 in which the cylinder-shaped peripheral wall 47 partitions the inside of the vapor generation device 40 into the water level detection chamber S1 and the evaporation chamber S2 surrounding the detection chamber S1, the vapor generation device 340 shown in Fig. 13A and Fig. 13B can suppress water temperature increase in the water level detection chamber S1 more efficiently and makes the boiling of the water therein less likely to occur since the area of the water level detection chamber S101 in contact with the evaporation chamber S102 can be decreased.

In the vapor generation device 340 shown in Fig. 13A and Fig. 13B, the drain outlet 374 may be provided so that some areas of the drain outlet 374 may face some areas of the lower end opening of the water level detection chamber S101. Thus, even if the space between the lower end of the partition section 347 and the bottom of the evaporation container 41 is decreased, the effective cross-sectional area of the flow path of the water flowing from the water level detection chamber S101 to the evaporation chamber S102 can be enlarged.

In the vapor generation device 40 shown in the Fig. 5 to 10 in the first embodiment, the lowest end of the peripheral wall 47 is made lower than the lower end of the electrodes 43a and 43b of the water level sensor 43, so that the reference water level for detection in the water level detection chamber, in the lower ends of the electrodes 43a and 43b of the water level sensor 43 is immersed, becomes higher than the lowest end of the peripheral wall 47.

Moreover, the air opening 75 is provided on the water level detection chamber S1 side of the evaporation container 41, so that air in the water level detection chamber S1 goes in and out of the air opening 75 in response to up-and-down motion of the water level in the water level detection chamber S1. Therefore, the water levels in the water level detection chamber S1 and the evaporation chamberS2, which are interconnected only on the bottom side of the evaporation container 41, can be made identical.

It is to be noted that an opening may be provided in a part of the peripheral wall on the side of the bottom so as to interconnect the water level detection chamber S1 and the evaporation chamber S2. In that case, a lower end opening 47a, may or may not be provided. It is to be noted that the upper end of the opening provided in a part of the peripheral closer to the bottom should preferably be made lower than the lowest end of the heating section (vapor generation heater 42), so that air bubbles generated in the evaporation chamber S1 become less likely to go into the water level detection chamber S1.

Moreover, the air opening 75 is dimensioned large enough not to be sealed by dew condensation water due to surface tension of the dew condensation water, so that it becomes possible to prevent the water level in the water level detection chamber S1 from failing to correctly move up and down because of the air opening sealed 75 by the dew condensation water.

Moreover, water travels through the water level detection chamber S1 of the evaporation container 41 and is fed into the evaporation container 41 from the lower end opening of the water level detection chamber S1, so that the inside of the water level detection chamber S1 is cooled, and thereby the increase in water temperature and the boil in the water level detection chamber S1 can be controlled effectively.

Moreover, a mounting portion of the evaporation container 41 on which the electrodes 43a and 43b of the water level sensor 43 are mounted is made of a non-conductive material, so that it becomes possible to more effectively prevent current from passing between the electrodes 43a and 43b of the water level sensor 43 due to the dew condensation water passing between the electrodes 43a and 43b.

Moreover, the peripheral wall 47 is made of a material (e.g., resin such as PPS (Polyphenylene Sulfide)) with thermal conductivity lower than water, so that the adiabatic efficiency between the water level detection chamber S1 and the evaporation chamber S2 can be enhanced.

As shown in Fig. 12, the adiabatic effect between the water level detection chamber S1 and the evaporation chambers S2 can be enhanced by using the peripheral wall 147 composed of multiple walls including the air layer 148.

The inner wall side of the water level detection chamber S1 is made of a material having as high water repellency as possible, so the dew condensation water becomes less likely to adhere to the inner wall side of the water level detection chamber S1, and dew condensation water is effectively prevented from passing between the electrodes 43a and 43b of the water level sensor 43. For example, although PPS is used in the first embodiment, resins which have higher water repellency than PPS (and which should have heat resistance) may be used.

The surface treatment for imparting water repellence (e.g., fluoride coating and Teflon (registered trademark; DuPont USA) coating) is applied to the inner wall side of the water level detection chamber S1, so that dew condensation water becomes less likely to adhere to the inner wall side of the water level detection chamber S1, and dew condensation water can effectively be prevented from passing between the electrodes 43a and43b of the water level sensor 43.

According to the invention, a high-end cooking device may be implemented by using the vapor generation device which can shorten the startup time of vapor generation while achieving correct detection of the water level in the evaporation container 41.

Although the electrode sensor structured to detect the water level by the long plate-like electrodes 43a and 43b was used as the water level sensor in the first embodiment, any sensor may be used as the water level sensor including electrostatic capacitance sensors and ultrasonic sensors.

Although the helix-shaped sheathed heater was used as the vapor generation heater 42 as an example of the heating section in the first embodiment, the heating section may be exemplified by other heating means (e.g., heating by plane heaters and heating wires, IH heating, and heating by gas combustion) depending on the forms of the evaporation containers. Although the heating section is provided on the evaporation chamber S2 side, the heating section may be provided inside the evaporation chamber S2 or outside the evaporation container 41, or may be embedded in the evaporation container 41 as long as at the heating section are placed at the positions where air bubbles generated in the evaporation chamber S2 are less likely to go into water level detection chamber S1.

Also in the first embodiment, the water fed via the feed water port 72 provided on the upper side of the water level detection chamber S1 travels through the water level detection chamber S1 and is fed into the evaporation container 41 from the lower end opening of the water level detection chamber S1. However, other water feed routes may be used, in which water may be fed from the drain outlet 74 on the bottom of the evaporation container 41 for example.

The distance between the electrodes the water level sensor is made too large for dew condensation water to pass therebetween with surface tension, by which it becomes possible to prevent erroneous detection by the water level sensor cause by dew condensation water passing current between the electrodes.

The distance between the electrode of the water level sensor and the cylinder-shaped peripheral wall is made too large for dew condensation water to pass between the electrode and the cylinder-shaped peripheral wall with surface tension, by which it becomes possible to prevent erroneous detection by the water level sensor.

Moreover, the water level sensor is embodied by the electrode sensor with simplified structure using two or more rod-like or long plate-like electrodes extending from the upper side of the evaporation container toward the lower side in the evaporation container, so that the structure can be simplified and costs can be reduced.

Moreover, the swelled section projecting toward the bottom of the inside of the evaporation container is provided on the mounting portion in the evaporation container on which the rod-like or long plate-like electrodes of the water level sensor are mounted, so that dew condensation water adhering to the vicinity of the mounting portion does not pass between the electrodes of the water level sensor, which allows prevention of erroneous detection by the water level sensor.

Moreover, the partition member is provided which extends from the upper side of the evaporation container to the lower side in the evaporation container for partitioning the space between the rod-like or long plate-like electrodes of the water level sensor, so that it becomes possible to prevent dew condensation water from passing between the electrodes of the water level sensor, and to thereby prevent erroneous detection by the water level sensor.

Moreover, the upper partition section for partitioning the space between the upper portions of the electrodes of the water level sensor protruding from the upper side of the evaporation container is provided in the evaporation container, so that it becomes possible to prevent dew condensation water from passing between the upper portions of the electrodes of the water level sensor, and to thereby prevent erroneous detection by the water level sensor. In this case, the upper end of the upper partition section should preferably be higher than the upper end of the electrodes.

Although in the vapor generation device 40 of the first embodiment, the lowest end of the peripheral wall 47 that is the partition section for partitioning the inside of the evaporation container 41 and the lowest end of the vapor generation heater 42 are positioned in the vicinity of the bottom of the evaporation container 41, and the lowest end of the peripheral wall 47 is made lower than the lowest end of the vapor generation heater 42, the structure of the partition section is not limited thereto, and therefore the lowest end of the partition section may be higher than the lowest end of the vapor generation heater.

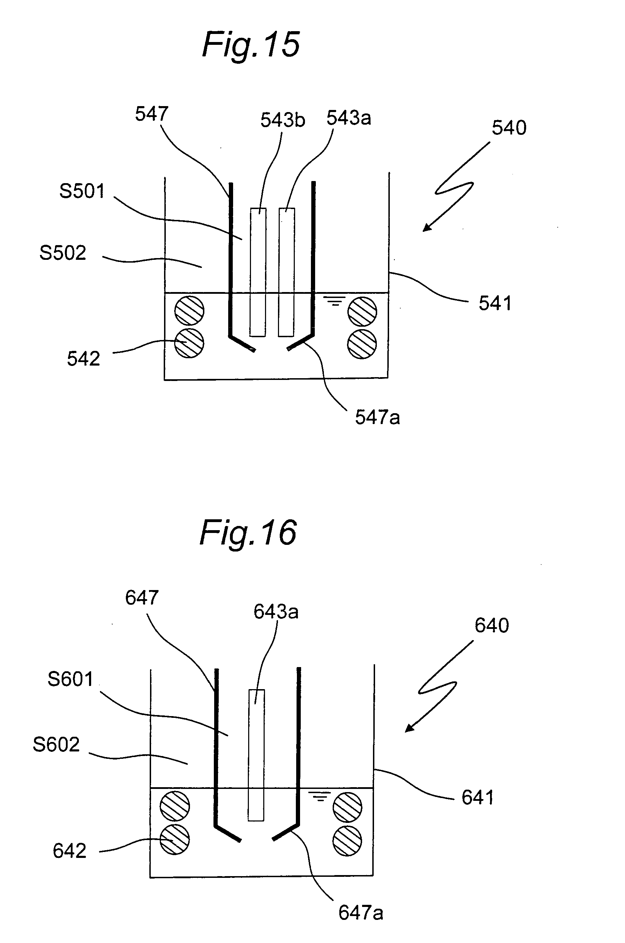

For example, Fig. 15 is a schematic view showing the longitudinal cross section of a vapor generation device 540 having a partition section in another form, in which a cylinder-shaped peripheral wall 547 is placed in an evaporation container 541 for partitioning the inside of the evaporation container 41 to form a water level detection chamber S501 and an evaporation chamber S502 which are interconnect only on the bottom side of the evaporation container 41. A lower end section 547a of the cylinder-shaped peripheral wall 547 is in the shape of a tapering truncated cone, and the lowest end of the lower end section 547a of the cylinder-shaped peripheral wall 547 is higher than the lowest end of the vapor generation heater 542. The plate-shaped electrodes 543a and 543b extend from the upper side of the evaporation container 541 toward the lower side in the water level detection chamber S501 and are placed generally parallel to each other at a predetermined interval. A helix-shaped vapor generation heater 542 is placed in the evaporation chamber S502 of the evaporation container 541 so as to surround the water level detection chamber S501. The lower end of the cylinder-shaped peripheral wall 547 has a predetermined distance to the plane of the bottom of the evaporation container 541, so that the water fed into the water level detection chamber S501 via an upper feed water port (not shown) is fed to the evaporation chamber S502 through the space between the lower end of the cylinder-shaped peripheral wall 547 and the bottom of the evaporation container 541.

Although the lower end section 547a of the cylinder-shaped peripheral wall 547 was in the shape of a tapering truncated cone in Fig. 15, the shape of the peripheral wall is not limited thereto, and therefore the lower end section 547a may has a cylinder shape continuing to its lower end.

### (Second Embodiment)

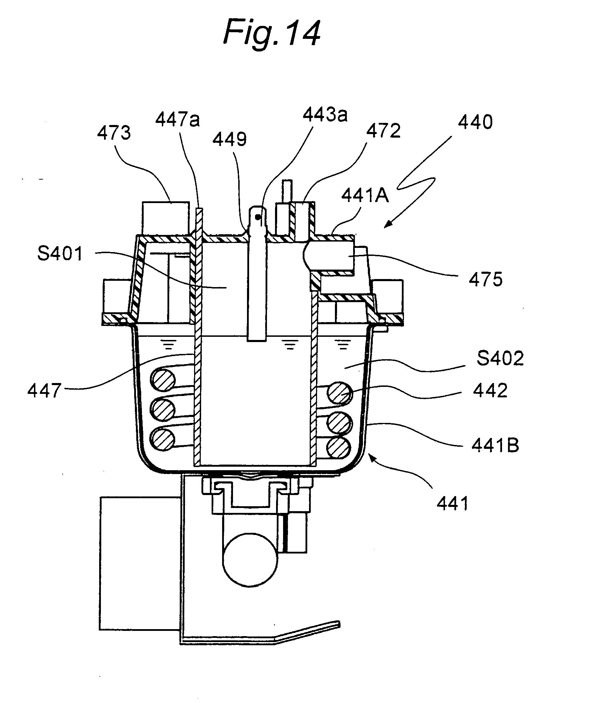

Fig. 14 is a longitudinal sectional view of a vapor generation device in a second embodiment of the invention. The vapor generation device of the second embodiment has the same structure as the vapor generation device of the first embodiment except for the water level sensor and the peripheral wall section. A cooking device using the vapor generation device of the second embodiment has the same structure as the cooking device of the first embodiment, and therefore explanation of the cooking device is omitted and Figs. 1 to 4 are to be used for reference.

An evaporation container 441 of a vapor generation device 440 is, as shown in Fig. 14, composed of a generally hat-shaped upper container 441A made from heat resistant resin and a generally cup-shaped lower container 441B which is made from stainless steel and which is capped with the upper container 441A. A feed water port 472 opening upward and a vapor outlet 473 opening upward are provided in the upper side of the upper container 441A, while an air opening 475 opening to the lateral side is provided in the upper container 441A. The feed water port 472 is connected to the second water feed pipe 34 (shown in Fig. 3).

Moreover, the upper container 441A has a cylinder-shaped peripheral wall 47 which has a generally elliptical horizontal section and which extends from the upper side toward the lower side of the upper container 41A, as an example of the partition section which partitions the inside of the evaporation container 41. The cylinder-shaped peripheral wall 447, which is made of a metallic material, is formed integrally with the upper container 441A by insert molding. The inside of the evaporation container 441 is partitioned by the cylinder-shaped peripheral wall 447 to form a water level detection chamber S401 and an evaporation chamber S402 which are interconnected only on the bottom side of the evaporation container 441. The water level detection chamber S401 and the evaporation chamber S402 are blocked from each other on the portion above the bottom side of the evaporation container 441 where they are interconnected to each other. A helix-shaped vapor generation heater 442 is placed in the evaporation chamber S402 of the evaporation container 441 so as to surround the water level detection chamber S401.

A long plate-like electrode 443a is placed so as to extend from the upper side of the evaporation container 441 toward the lower side in the evaporation container 441. A water level sensor detects the water level in the evaporation container 441 based on the electrostatic capacitance between the long plate-like electrode 443a and the cylinder-shaped peripheral walls 447 made of a metallic material.

An upper swelled section 449 is provided above the mounting section of the evaporation container 441 on which an upper portion of the electrode 443a and an upper portion 447a of the cylinder-shaped peripheral walls 447 are mounted, the electrode 443a being projected from the upper side of the evaporation container 441. The upper swelled section 49 has a taper inclined from the upper portion of the electrodes 443a and the upper portion 447a of the cylinder-shaped peripheral wall 447 toward the evaporation container 41 side. It becomes possible to prevent water from passing between the upper portion of the electrode 443a and the upper portion 447a of the peripheral wall 447 due to water drops fallen from the upper side of the evaporation container 441 and further fallen downward along the taper of the upper swelled section 449.

The vapor generation device 440 of the second embodiment has the same effect as the vapor generation device 40 of the first embodiment.

Moreover, the water level sensor detects the water level in the water level detection chamber S401 based on the electrostatic capacitance between the electrode 443a and the peripheral wall 447, so that reliable detection of the water level can be achieved with simple structure.

Moreover, the peripheral wall 447 that is the partition section also serves as one of the electrodes for detecting the water level, so that the structure can be simplified, while a distance which can prevent dew condensation water from crossing between the electrodes due to surface tension can easily be secured, which makes it possible to prevent current from passing between the electrodes with dew condensation water and to thereby prevent erroneous detection by the water level sensor. Moreover, the peripheral wall 447 that is the partition section is constituted of an electrode made of a metallic material, so that it becomes possible to prevent the partition section from melting when the heating section should be overheated due to failure. Although the peripheral wall 447 made of a metallic material was used as the partition section, the partition section is not limited thereto. The partition section may be a cylinder made from heat-resistant resin, which is formed integrally with a metal cylinder made of a sheet metal, or may be a heat-insulated structure formed by combining a cylinder made from heat-resistant resin and a metal cylinder.

Although in the vapor generation device 44 of the second embodiment, the lowest end of the peripheral wall 447 that is the partition section for partitioning the inside of the evaporation container 441 and the lowest end of the vapor generation heater 442 are positioned in the vicinity of the bottom of the evaporation container 441, and the lowest end of the peripheral wall 447 is made lower than the lowest end of the vapor generation heater 442, the structure of the partition section is not limited thereto, and therefore the lowest end of the partition section may be higher than the lowest end of the vapor generation heater.

For example, Fig. 16 is a schematic view showing the longitudinal cross section of a vapor generation device 640 having a partition section in another form, in which a cylinder-shaped peripheral wall 647 is placed in an evaporation container 641 for partitioning the inside of the evaporation container 641 to form a water level detection chamber S601 and an evaporation chamber S602 which are interconnect only on the bottom side of the evaporation container 641. A lower end section 647a of the cylinder-shaped peripheral wall 647 is in the shape of a tapering truncated cone, and the lowest end of the lower end section 647a of the cylinder-shaped peripheral wall 647 is higher than the lowest end of the vapor generation heater 642. A plate-shaped electrode 643a is placed so as to extend from the upper side of the evaporation container 641 toward the lower side in the water level detection chamber S501. A helix-shaped vapor generation heater 642 is placed in the evaporation chamber S602 of the evaporation container 641 so as to surround the water level detection chamber S601. The lower end of the cylinder-shaped peripheral wall 647 has a predetermined distance to the plane of the bottom of the evaporation container 641, so that the water fed into the water level detection chamber S601 via an upper feed water port (not shown) is fed to the evaporation chamber S602 through the space between the lower end of the cylinder-shaped peripheral wall 647 and the bottom of the evaporation container 641.

Although the lower end section 647a of the cylinder-shaped peripheral wall 647 was in the shape of a tapering truncated cone in Fig. 16, the shape of the peripheral wall is not limited thereto, and therefore the lower end section 547a may has a cylinder shape continuing to its lower end.

Although description has been given of the first and second embodiments of the invention, it will be understood that the invention is capable of modifications without departing from the spirit and principles of the invention.

## Claims

1. A vapor generation device, comprising:
an evaporation container;
a partition section for partitioning an inside of the evaporation container to form a water level detection chamber and an evaporation chamber that are interconnected only on a bottom side of the evaporation container;
a water level sensor for detecting a water level in the water level detection chamber;
a heating section placed in the evaporation container at a position on an evaporation chamber side; and
a vapor outlet provided in the evaporation container at a position on an evaporation chamber side, wherein
vapor generated in the evaporation chamber by heating water in the evaporation chamber by the heating section is discharged through the vapor outlet.

2. The vapor generation device according to Claim 1, wherein
a lowest end of the partition section and a lowest end of the heating section are positioned in a vicinity of a bottom of the evaporation container, and the lowest end of the partition section is lower than the lowest end of the heating section.

3. The vapor generation device according to Claim 1, wherein
the water level sensor detects a water level in the water level detection chamber based on an inter-electrode electrostatic capacitance.

4. The vapor generation device according to Claim 3, wherein
one of the electrodes serves as the partition section.

5. The vapor generation device according to any one of Claims 1 to 4, wherein
a drain outlet is provided on the bottom of the evaporation container, and
an area of the drain outlet faces an area of a lower end opening of the water level detection chamber.

6. The vapor generation device according to Claim 5, wherein
the drain outlet is provided in generally a center of the bottom of the evaporation container.

7. The vapor generation device according to Claim 1, wherein
the partition section for partitioning the inside of the evaporation container is a cylinder-shaped peripheral wall placed inside the evaporation container.

8. The vapor generation device according to Claim 1, wherein
the partition section for partitioning the inside of the evaporation container is a partition section which forms the water level detection chamber together with a part of an inner wall of the evaporation container.

9. The vapor generation device according to Claim 1, wherein
a lowest end of the partition section is lower than a lower end of the electrode of the water level sensor.

10. The vapor generation device according to Claim 1, wherein
an air opening is provided in the evaporation container at a position on a water level detection chamber side.

11. The vapor generation device according to Claim 10, wherein
the air opening is dimensioned large enough not to be sealed by dew condensation water due to surface tension of the dew condensation water.

12. The vapor generation device according to Claim 1, wherein
passing through the water level detection chamber of the evaporation container, water is fed into the evaporation container through a lower end opening of the water level detection chamber.

13. The vapor generation device according to Claim 1, wherein
a mounting portion of the evaporation container on which the electrode of the water level sensor is mounted is made of a non-conductive material.

14. The vapor generation device according to Claim 1, wherein
the partition section is made of a material whose thermal conductivity is lower than water.

15. The vapor generation device according to Claim 1, wherein
the partition section is composed of multiple walls including an air layer.

16. The vapor generation device according to Claim 1, wherein
surface treatment is applied to an inner wall side of the water level detection chamber to provide water repellence thereto.

17. A cooking device comprising the vapor generation device according to Claim 1.
